# EUROPEAN PATENT APPLICATION

(11) **EP 3 188 353 A1**
(43) Date of publication of application: **05.07.2017**
(21) Application number: 15851081.8
(22) Date of filing: 15.10.2015
(51) Int. Cl.: H02M 7/06, H02M 7/48

(54) **CURRENT ESTIMATION CIRCUIT FOR RECTIFICATION CIRCUIT, AC-DC CONVERTER, ELECTRIC POWER CONTROL DEVICE, CURRENT ESTIMATION CIRCUIT, AND METHOD AND PROGRAM FOR CURRENT ESTIMATION**

(30) Priority: 17.10.2014 JP 2014212667
(71) Applicant: Mitsubishi Heavy Industries, Ltd., Tokyo 108-8215 (JP)
(72) Inventor: SHIMIZU, Kenji, Tokyo 108-8215 (JP); SUMITO, Kiyotaka, Tokyo 108-8215 (JP); SUMIYA, Atsuyuki, Tokyo 108-8215 (JP)
(74) Representative: Intès, Didier Gérard André
(86) International application number: PCT/JP2015/079148
(87) International publication number: WO 2016/060196

(57) **Abstract**

This current estimation circuit for a rectification circuit is provided with a phase identification part and a current identification part. The phase identification part identifies the phases of multiple alternating voltages output from a power supply. The current identification part identifies, at time intervals determined on the basis of the phases identified by the phase identification part, currents that correspond to voltages resulting from rectification of the multiple alternating voltages.

## Description

### Technical Field

The present invention relates to a current estimation circuit for a rectification circuit, an AC-DC converter, an electric power control device, a current estimation circuit, and a method and program for current estimation.

Priority is claimed on Japanese Patent Application No. 2014-212667, filed October 17, 2014, the content of which is incorporated herein by reference.

### Background Art

There is a system that generates a voltage to drive a motor on the basis of an alternating voltage that is supplied from a three-phase alternating power supply. Generally, the system that generates a voltage to drive a motor includes an AC-DC converter and an inverter. In this system, the AC-DC converter converts the alternating voltage supplied from the three-phase alternating power supply from the alternating voltage into a DC voltage, and the inverter converts the DC voltage converted by the AC-DC converter into an alternating voltage. By doing so, the system generates a DC voltage suitable for driving of the motor.

Related art is disclosed in PTL 1. A device disclosed in PTL 1 includes a pulse width modulation (PWM) rectification circuit and a PWM inverter. This device determines whether or not there is an abnormality in a supply voltage for the PWM rectification circuit on the basis of a current. This device decreases an output frequency or a duty of the PWM inverter in a case where it is determined that there is an abnormality, to thereby protect the circuit.

### Citation List

### Patent Literature

[PTL 1] Japanese Patent No. 4759968

### Summary of Invention

### Technical Problem

If respective voltages of an R phase, an S phase, and a T phase of a three-phase alternating power supply enter an unbalanced state in a system that generates a voltage to drive a general motor, an excessive current may flow into a device to which an electric power is supplied from the three-phase alternating power supply or a device connected to a stage subsequent to such a device. In this case, a malfunction is likely to occur in the system.

Therefore, a technology capable of easily detecting an abnormal state in a system and protecting the system in a case where the respective voltages of the R phase, the S phase, and the T phase of the three-phase alternating power supply enter an unbalanced state, is required.

An object of the present invention is to provide a current estimation circuit for a rectification circuit, an AC-DC converter, an electric power control device, a current estimation circuit, and a method and program for current estimation capable of solving the above problem.

### Solution to Problem

According to a first aspect of the present invention, a current estimation circuit for a rectification circuit includes a phase identification part that identifies respective phases of a plurality of alternating voltages that are output from a power supply; and a current identification part that identifies currents corresponding to voltages after rectification of the plurality of alternating voltages at time intervals determined on the basis of the respective phases identified by the phase identification part.

According to a second aspect of the present invention, in the current estimation circuit for a rectification circuit in the first aspect, the current identification part may identify the currents corresponding to the voltages after rectification on the basis of a current flowing through a resistor after the rectification.

According to a third aspect of the present invention, in the current estimation circuit for a rectification circuit in the first aspect, the current identification part may identify the currents corresponding to the voltages after rectification on the basis of a current detected by a current transformer after the rectification.

According to a fourth aspect of the present invention, the current estimation circuit for a rectification circuit in any one of the first to third aspects may further include a current estimation part that estimates respective currents corresponding to the plurality of alternating voltages on the basis of the currents corresponding to the voltages after rectification identified by the current identification part.

According to a fifth aspect of the present invention, the current estimation circuit for a rectification circuit in the fourth aspect may further include a current determination part that determines whether or not each of the currents estimated by the current estimation part exceeds a current abnormality detection threshold value; and a current limiting part that limits an upper limit of the respective estimated currents corresponding to the determination in a case where the current determination part determines that the respective estimated currents exceed the current abnormality detection threshold value.

According to a sixth aspect of the present invention, an AC-DC converter includes the current estimation circuit for a rectification circuit in any one of the first to fifth aspects; and a smoothing circuit that smoothes a voltage output by the rectification circuit.

According to a seventh aspect of the present invention, an electric power control device includes the AC-DC converter in the sixth aspect; and an inverter that converts a DC voltage output by the AC-DC converter into an alternating voltage.

According to an eighth aspect of the present invention, a current estimation circuit includes a current estimation part that estimates respective currents corresponding to a plurality of alternating voltages output from a power supply on the basis of currents corresponding to voltages after rectification of the plurality of alternating voltages at time intervals determined on the basis of respective phases of the plurality of alternating voltages.

According to a ninth aspect of the present invention, the current estimation circuit in the eighth aspect may further include a current determination part that determines whether or not each of the currents estimated by the current estimation part exceeds a current abnormality detection threshold value; and a current limiting part that limits an upper limit of the respective estimated currents corresponding to the determination in a case where the current determination part determines that the respective estimated currents exceed the current abnormality detection threshold value.

According to a tenth aspect of the present invention, a current estimation method includes identifying respective phases of a plurality of alternating voltages that are output from a power supply; and identifying currents corresponding to voltages after rectification of the plurality of alternating voltages at time intervals determined on the basis of the respective identified phases.

According to an eleventh aspect of the present invention, a current estimation method includes estimating respective currents corresponding to a plurality of alternating voltages output from a power supply on the basis of currents corresponding to voltages after rectification of the plurality of alternating voltages at time intervals determined on the basis of respective phases of the plurality of alternating voltages.

According to a twelfth aspect of the present invention, a program causes a computer to execute estimating respective currents corresponding to a plurality of alternating voltages output from a power supply on the basis of currents corresponding to voltages after rectification of the plurality of alternating voltages at time intervals determined on the basis of respective phases of the plurality of alternating voltages. Advantageous Effects of Invention

According to the current estimation circuit for a rectification circuit, the AC-DC converter, the electric power control device, the current estimation circuit, and the method and the program for current estimation, it is possible to easily detect an abnormal state in a system and protect the system in a case where respective voltages of the R phase, the S phase, and the T phase of the three-phase alternating power supply enter an unbalanced state. Brief Description of Drawings

Fig. 1 is a diagram illustrating an example of a configuration of an electric power control device including a rectification circuit according to an embodiment of the present invention.
Fig. 2 is a diagram illustrating an example of simulation waveforms of voltages and currents in a case where a three-phase (R phase, S phase, and T phase) alternating voltage is in a balanced state in the embodiment.
Fig. 3 is a diagram illustrating an example of simulation waveforms of voltages and currents in a case where a three-phase alternating voltage is in an unbalanced state in the embodiment.
Fig. 4 is a diagram illustrating an example of a process flow in a normal state of the electric power control device according to the embodiment.
Fig. 5 is a diagram illustrating an example of a process flow for detecting an abnormal state of the electric power control device according to the embodiment.
Fig. 6 is a diagram illustrating an example of a configuration of an electric power control device including a PAM circuit according to the embodiment.
Fig. 7 is a diagram illustrating an example of a configuration of an electric power control device including an active converter according to the embodiment.

### Description of Embodiments

### <Embodiments>

Hereinafter, embodiments will be described in detail with reference to the drawings.

First, a configuration of an electric power control device 1 including a rectification circuit 100 according to this embodiment will be described.

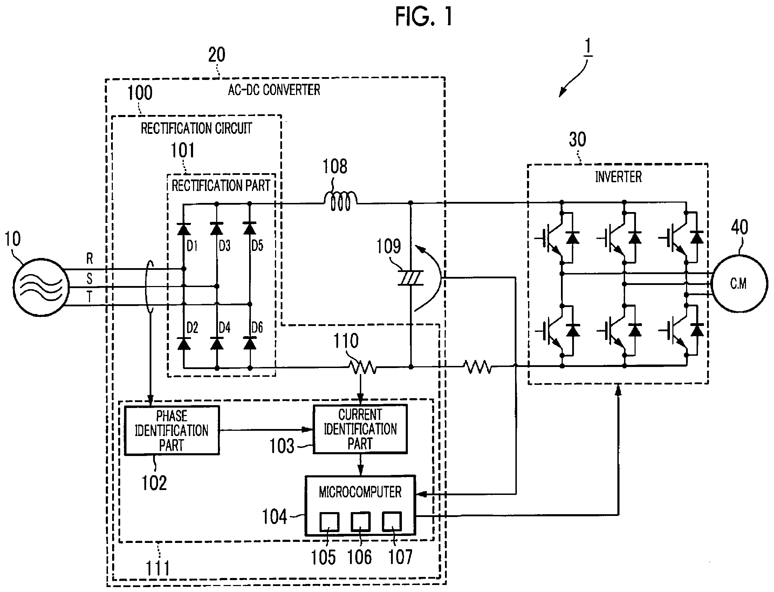

Fig. 1 is a diagram illustrating an example of a configuration of the electric power control device 1 including a rectification circuit 100 according to an embodiment of the present invention.

As illustrated in Fig. 1, the electric power control device 1 according to this embodiment includes an alternating power supply 10, an AC (Alternative Current)-DC (Direct Current) converter 20, an inverter 30, and a motor 40.

The alternating power supply 10 outputs a plurality of alternating voltages. For example, the alternating power supply 10 outputs three sinusoidal alternating voltages (R phase, S phase, and T phase) of which phases are mutually shifted by 120° to a rectification part 101.

The AC-DC converter 20 includes a rectification circuit 100, a reactor 108, and a capacitor 109.

The rectification circuit 100 includes the rectification part 101, a current detection resistor 110, and a current estimation circuit 111.

The rectification part 101 rectifies the alternating voltage output from the alternating power supply 10. For example, the rectification part 101 includes six diodes D1 to D6. An anode of the diode D1 is connected to a cathode of the diode D2. An anode of the diode D3 is connected to a cathode of the diode D4. An anode of the diode D5 is connected to a cathode of the diode D6. The alternating power supply 10 outputs an R-phase alternating voltage to the anode of the diode D1. The alternating power supply 10 outputs an S-phase alternating voltage to the anode of the diode D3. The alternating power supply 10 outputs a T-phase alternating voltage to the anode of the diode D5. The rectification part 101 performs full-wave rectification on the alternating voltage that the alternating power supply 10 outputs to the rectification part 101.

The current detection resistor 110 is a resistor that detects a converter current flowing through the AC-DC converter 20.

The current estimation circuit 111 includes a phase identification part 102, a current identification part 103, and a microcomputer 104.

The phase identification part 102 identifies each phase of the plurality of alternating voltages output from the alternating power supply 10. For example, the phase identification part 102 includes a zero cross detection circuit. The zero cross detection circuit included in the phase identification part 102 detects a zero cross point using an inter-line voltage or a phase voltage. The zero cross point is a point at which a bias voltage indicating a zero amplitude of the alternating voltage crosses the alternating voltage.

For example, in a case where the zero cross point is detected using the phase voltage, the zero cross detection circuit included in the phase identification part 102 detects a zero cross point of the R-phase alternating voltage. The phase identification part 102 identifies a zero cross timing of the R-phase alternating voltage on the basis of the zero cross point of the R-phase alternating voltage detected by the zero cross detection circuit. The phase identification part 102 identifies a timing obtained by shifting the identified zero cross timing of the R-phase alternating voltage by a timing (+1/3 period) corresponding to the phase of +120° as a zero cross timing of the S-phase alternating voltage. The phase identification part 102 identifies a timing obtained by shifting the identified zero cross timing of the S-phase alternating voltage by a timing corresponding to the phase of +120° as a zero cross timing of the T-phase alternating voltage.

For example, in a case where the zero cross point is detected using the inter-line voltage, the zero cross detection circuit included in the phase identification part 102 detects a zero cross point of the R-S voltage. The phase identification part 102 identifies a zero cross timing of the R-S voltage on the basis of the zero cross point of the R-S voltage detected by the zero cross detection circuit. The phase identification part 102 identifies a timing obtained by shifting the identified zero cross timing of the R-S voltage by a timing (+1/3 period) corresponding to a phase of +120° as a zero cross timing of the S-T voltage. The phase identification part 102 identifies a timing obtained by shifting the identified zero cross timing of the S-T voltage by the timing corresponding to the phase of +120° as a zero cross timing of the T-R voltage.

The zero cross detection circuit included in the phase identification part 102 is not limited to a circuit that detects one phase of the three-phase alternating voltage (a zero cross point of the R-phase alternating voltage in a case where the zero cross point is detected using the phase voltage, and a zero cross point of the R-S voltage in a case where the zero cross point is detected using the inter-line voltage). For example, the zero cross detection circuit included in the phase identification part 102 may detect two phases of the three-phase alternating voltage. Further, the zero cross detection circuit may detect three phases of the three-phase alternating voltage. In the zero cross detection circuit included in the phase identification part 102, it is possible to reduce an influence of noise or a detection error on a phase detection result if the number of voltages of which a phase is detected in the three-phase alternating voltage increases.

The current identification part 103 identifies a current corresponding to a voltage after rectification of a plurality of alternating voltages at time intervals of the zero cross timing determined on the basis of each phase of the plurality of alternating voltages identified by the phase identification part 102. For example, the current identification part 103 acquires a voltage generated across a resistor arranged in stage subsequent to the rectification circuit 100. The current identification part 103 calculates a current by dividing the acquired voltage by a resistance value of the resistor. Further, for example, the current identification part 103 divides a voltage across the current detection resistor 110 arranged in a stage subsequent to the rectification circuit 100 by a resistance value to acquire a current.

The microcomputer 104 includes a current estimation part 105, a current determination part 106, and a current limiting part 107.

The current estimation part 105 estimates a current corresponding to each of the plurality of alternating voltages on the basis of the current corresponding to the voltage after rectification of the plurality of alternating voltages identified by the current identification part 103.

The current determination part 106 determines whether or not each current estimated by the current estimation part 105 exceeds a current abnormality detection threshold value. The current abnormality detection threshold value is a current value serving as a criterion on the basis of which the current determination part 106 determines that the electric power control device 1 is in a state different from a normal state if a current higher than the current abnormality detection threshold value flows. The current abnormality detection threshold value may be determined by circuit simulation, for example.

In a case where the current determination part 106 determines that the current exceeds the current abnormality detection threshold value, the current limiting part 107 limits an upper limit of the current corresponding to the determination.

The reactor 108 and the capacitor 109 constitute a smoothing circuit. This smoothing circuit smoothes the voltage output by the rectification circuit 100.

The inverter 30 converts a DC voltage output by the AC-DC converter 20 into an alternating voltage. For example, the inverter 30 is an inverter configured with an Insulated Gate Bipolar Transistor (IGBT).

The motor 40 operates according to the alternating voltage output by the inverter 30.

Next, full-wave rectification of the alternating voltage that is performed by the rectification circuit 100 will be described.

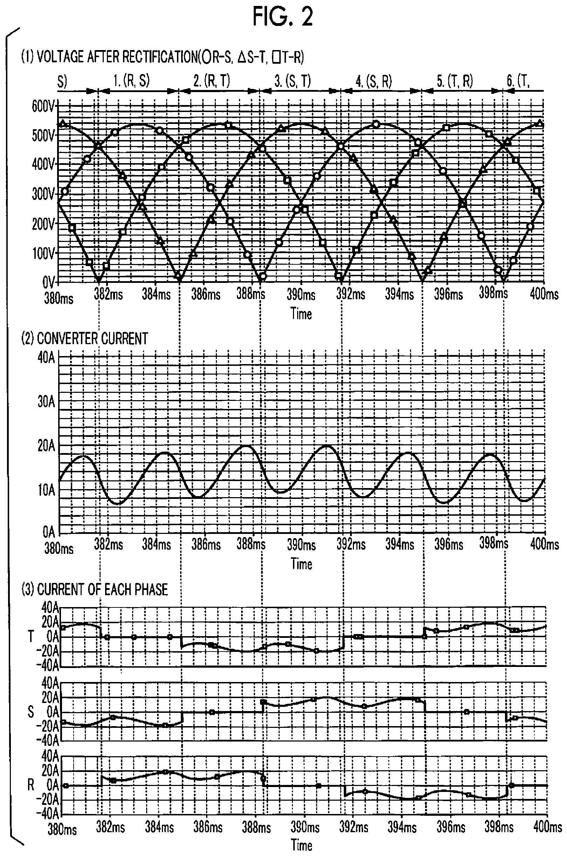

Fig. 2 is a diagram illustrating an example of simulation waveforms of a voltage and a current in a case where a three-phase (R phase, S phase, and T phase) alternating voltage is in a balanced state.

A simulation condition is that a frequency of the three-phase alternating voltage is 50 Hz. Further, the simulation condition is that an amplitude of the three-phase alternating voltage is 380 volts.

Part (1) of Fig. 2 illustrates simulation waveforms of inter-line voltages (R-S voltage, S-T voltage, and T-R voltage) after rectification of the three-phase alternating voltage. A horizontal axis indicates time. Further, a vertical axis indicates the voltage.

Phases of the respective simulation waveforms of the R-S voltage, the S-T voltage, and the T-R voltage are shifted from one another by 120°. Further, since the three-phase alternating voltage is in a balanced state, amplitudes of the simulation waveforms of the R-S voltage, the S-T voltage, and the T-R voltage are the same.

Part (2) of Fig. 2 illustrates a simulation waveform of a converter current. A horizontal axis indicates time. Further, a vertical axis indicates the current.

The converter current is a sum of currents corresponding to voltages after rectification of the three-phase alternating voltage, and is the current identified by the current identification part 103.

The three-phase alternating voltage is in a balanced state, and the R-S voltage, the S-T voltage, and the T-R voltage are substantially the same. Therefore, the converter current which is a sum of currents corresponding to the voltages after rectification of the three-phase alternating voltage shows a slight fluctuation in a bias current, but shows a current fluctuation having a waveform close to a sinusoidal wave having a constant period.

Part (3) of Fig. 2 illustrates a simulation waveform of respective currents corresponding to the R phase, the S phase, and the T phase of the three-phase alternating voltage. A horizontal axis indicates time. Further, a vertical axis indicates the current.

Since the three-phase alternating voltage is in balanced state, phases of the respective currents corresponding to the R phase, the S phase, and the T phase are shifted from one another by 120°, but the respective current waveforms are substantially the same.

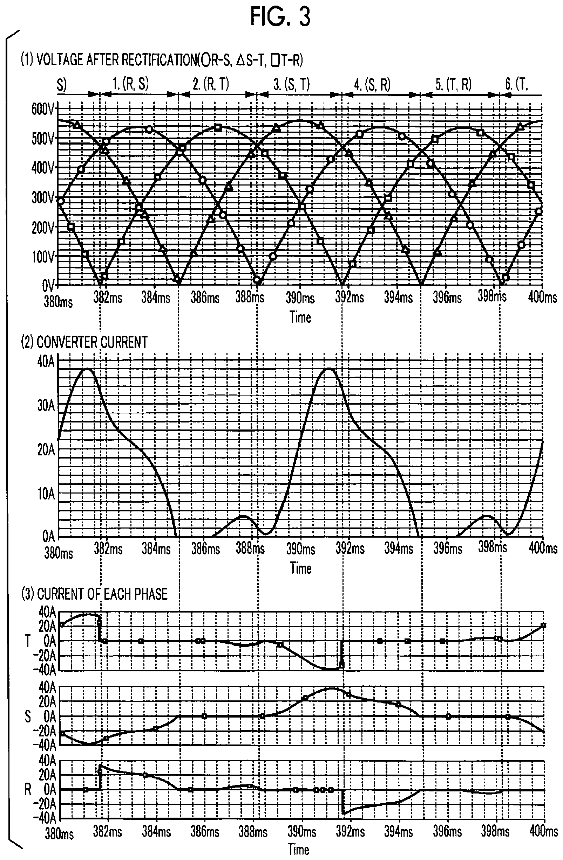

Fig. 3 is a diagram illustrating an example of simulation waveforms of a voltage and a current in a case where the three-phase alternating voltage is in an unbalanced state.

A simulation condition is that a frequency of the three-phase alternating voltage is 50 Hz. Further, the simulation condition is that an amplitude of the three-phase alternating voltage is 380 volts. However, in a simulation of a voltage and a current in a case where the three-phase alternating voltage is in an unbalanced state, a 3% variation is given as an unbalance rate. (Amplitudes of the S and T-phase alternating voltages are 3% larger than the amplitude of the R-phase alternating voltage.)

Part (1) of Fig. 3 illustrates a simulation waveform of the inter-line voltage (R-S voltage, S-T voltage, and T-R voltage) after rectification of the three-phase alternating voltage. A horizontal axis indicates time. Further, a vertical axis indicates the voltage.

Phases of the respective simulation waveforms of the R-S voltage, the S-T voltage, and the T-R voltage are shifted from one another by 120°. Further, the unbalance rate is 3%, and the three-phase alternating voltage is in an unbalanced state. Therefore, an amplitude of the simulation waveform of the S-T voltage is larger than the amplitudes of the respective simulation waveforms of the R-S voltage and the T-R voltage.

Part (2) of Fig. 3 illustrates a simulation waveform of the converter current. A horizontal axis indicates time. Further, a vertical axis indicates the current.

The three-phase alternating voltage is in an unbalanced state, and an amplitude of the simulation waveform of the S-T voltage is larger than the amplitudes of the simulation waveform of the R-S voltage and the T-R voltage. Therefore, a waveform of the converter current which is a sum of currents corresponding to the voltages after rectification of the three-phase alternating voltage is different from a waveform close to a sinusoidal wave having a constant period viewed in a case where the three-phase alternating voltage is in a balanced state. A waveform of the converter current is a waveform having a constant period, but including a period of time in which a large current flows and a period of time in which a much current does not flow. Further, a peak value of the converter current in a case where the three-phase alternating voltage is in an unbalanced state is larger than a peak value of the converter current in a case where the three-phase alternating voltage is in the balanced state.

Part (3) of Fig. 3 illustrates simulation waveforms of the respective currents corresponding to the R phase, the S phase, and the T phase of the three-phase alternating voltage. A horizontal axis indicates time. Further, a vertical axis indicates the current.

Since the three-phase alternating voltage is in an unbalanced state, the respective currents corresponding to the R phase, the S phase, and the T phase have different current waveforms, unlike the case where the three-phase alternating voltage is in the unbalanced state.

As illustrated in Fig. 3, attention is paid to part (2) of Fig. 3 and part (3) of Fig. 3 which are divided into period of time 1 to period of time 6.

The period of time 1 and the period of time 4 are periods of time in which the current corresponding to the T phase of the three-phase alternating voltage does not flow as illustrated in the part (3) of Fig. 3. Therefore, currents in period of time 1 and period of time 4 of the converter current illustrated in part (2) of Fig. 3 are currents flowing on the basis of the currents corresponding to the R phase and the S phase of the three-phase alternating voltage.

The period of time 2 and the period of time 5 are periods of time in which the current corresponding to the S phase of the three-phase alternating voltage does not flow as illustrated in the part (3) of Fig. 3. Therefore, currents in period of time 2 and period of time 5 of the converter current illustrated in part (2) of Fig. 3 are currents flowing on the basis of the currents corresponding to the R phase and the T phase of the three-phase alternating voltage.

The period of time 3 and the period of time 6 are periods of time in which the current corresponding to the R phase of the three-phase alternating voltage does not flow as illustrated in the part (3) of Fig. 3. Therefore, currents in period of time 3 and period of time 6 of the converter current illustrated in part (2) of Fig. 3 are currents flowing on the basis of the currents corresponding to the S phase and the T phase of the three-phase alternating voltage.

Therefore, the respective converter currents in the period of time 1 to the period of time 6 are currents flowing on the basis of respective currents corresponding to the R phase, the S phase, and the T phase of the three-phase alternating voltage. The respective converter currents in the period of time 1 to the period of time 6 have a correlation with the respective currents corresponding to the R phase, the S phase, and the T phase of the three-phase alternating voltage. It is known that if the respective currents corresponding to the R phase, the S phase, and the T phase of the three-phase alternating voltage increase, the corresponding converter currents in the period of time 1 to period of time 6 also increase. Therefore, the current estimation part 105 can estimate the currents corresponding to the R phase, the S phase, and the T phase of the three-phase alternating voltage on the basis of the converter current.

More specifically, the current estimation part 105 estimates a magnitude of the current corresponding to each phase of the three-phase alternating voltage by averaging the converter current identified by the current identification part 103 in a period of time in which the current flows. A case where the three-phase alternating voltage is in an unbalanced state and has the voltage and the current illustrated in Fig. 3 will be described as a specific example. In this case, the current estimation part 105 estimates the current corresponding to the R phase of the three-phase alternating voltage as an average value of the converter current in (period of time 1 + period of time 2 + period of time 4 + period of time 5). The current estimation part 105 estimates the current corresponding to the S phase of the three-phase alternating voltage as an average value of the converter current in (period of time 1 + period of time 3 + period of time 4 + period of time 6). The current estimation part 105 estimates the current corresponding to the T phase of the three-phase alternating voltage as an average value of the converter current in (period of time 2 + period of time 3 + period of time 5 + period of time 6).

The current determination part 106 determines whether or not each current estimated by the current estimation part 105 exceeds a current abnormality detection threshold value.

In a case where the current determination part 106 determines that the current exceeds the current abnormality detection threshold value, the current limiting part 107 limits an upper limit of the current corresponding to the determination.

By doing so, the electric power control device 1 can detect an excessive current flowing in a case where the three-phase alternating voltage is in an unbalanced state, and protect the device.

Next, a process that is performed by the electric power control device 1 according to this embodiment will be described.

Here, the process will be described, for example, in the electric power control device 1 illustrated in Fig. 1.

A process in a normal state in which the electric power control device 1 rectifies a three-phase alternating voltage to generate a DC voltage, and generates an alternating voltage for driving the motor 40 from the generated DC voltage will be described.

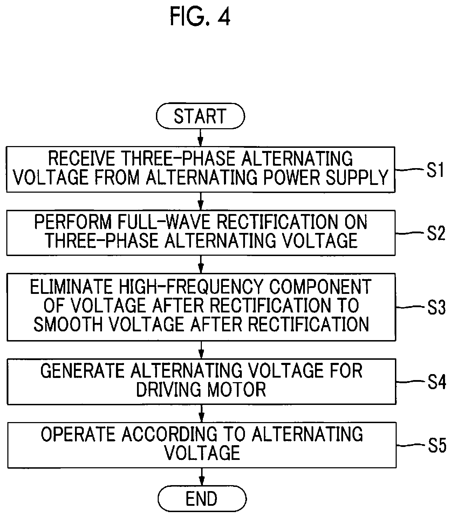

Fig. 4 is a diagram illustrating an example of a process flow in a normal state of the electric power control device 1 according to this embodiment.

The alternating power supply 10 outputs an alternating voltage of three phases (R phase, S phase, and T phase) that are shifted from one another by 120° to the AC-DC converter 20.

If the AC-DC converter 20 receives the three-phase alternating voltage from the alternating power supply 10, the rectification part 101 receives the three-phase alternating voltage from the alternating power supply 10 (step S1). More specifically, for example, the rectification part 101 receives the R-phase alternating voltage from a connection node between the anode of the diode D1 and the cathode of the diode D2, as illustrated in Fig. 1. The rectification part 101 receives the S-phase alternating voltage from a connection node between the anode of the diode D3 and the cathode of the diode D4. The rectification part 101 receives the T-phase alternating voltage from a connection node between the anode of the diode D5 and the cathode of the diode D6.

The rectification part 101 performs full-wave rectification on the received three-phase alternating voltage (step S2). The rectification part 101 outputs the voltage after rectification to the reactor 108.

The reactor 108 and the capacitor 109 constitute a smoothing circuit and smoothes the voltage after rectification (step S3). The reactor 108 and the capacitor 109 output the DC voltage after smoothing to the inverter 30.

If the inverter 30 receives the DC voltage, the inverter 30 generates an alternating voltage for driving the motor 40 from the received DC voltage (step S4). The inverter 30 outputs the generated alternating voltage to the motor 40.

If the motor 40 receives the alternating voltage from the inverter 30, the motor 40 operates according to the received alternating voltage (step S5).

A process in a case where the electric power control device 1 is in a normal state has been described above. In the normal state, the electric power control device 1 performs the above-described process to operate the motor 40.

Next, a process of detecting an abnormal state that the electric power control device 1 performs in parallel with the process in the normal state will be described.

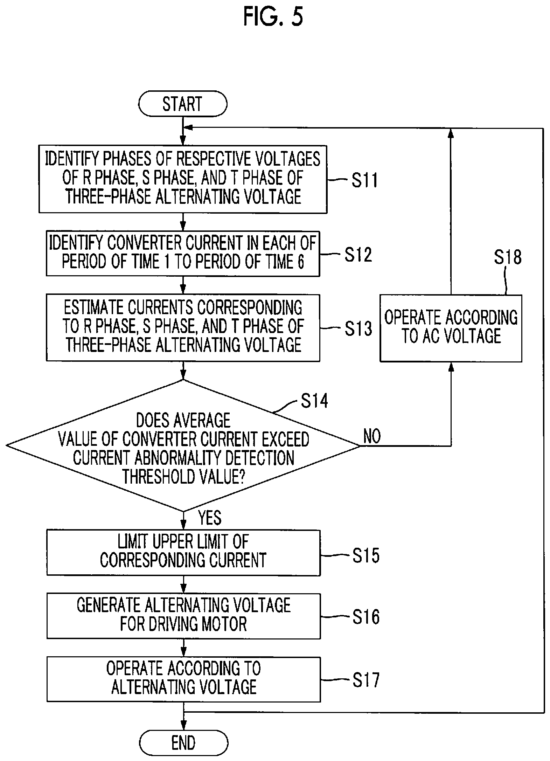

Fig. 5 is a diagram illustrating an example of a process flow for detecting an abnormal state of the electric power control device 1 according to this embodiment.

If the AC-DC converter 20 receives the three-phase alternating voltage from the alternating power supply 10, the phase identification part 102 receives the three-phase alternating voltage from the alternating power supply 10.

The phase identification part 102 identifies the phases of respective voltages of the R phase, the S phase, and the T phase of the received three-phase alternating voltage (step S11). For example, the phase identification part 102 includes a zero cross detection circuit. The zero cross detection circuit included in the phase identification part 102 detects the zero cross point of the inter-line voltage R-S voltage. The phase identification part 102 identifies the zero cross point of the R-S voltage detected by the zero cross detection circuit as a zero cross timing of the R-S voltage. The phase identification part 102 identifies a timing obtained by shifting the identified zero cross timing of the R-S voltage by a timing (+1/3 period) corresponding to a phase of +120° as a zero cross timing of the S-T voltage. The phase identification part 102 identifies a timing obtained by shifting the identified zero cross timing of the S-T voltage by the timing corresponding to the phase of +120° as a zero cross timing of the T-R voltage. The zero cross detection circuit included in the phase identification part 102 may be a circuit that detects the zero cross point using the phase voltage.

The phase identification part 102 is not limited to a phase identification part that detects one phase of the three-phase alternating voltage (a zero cross point of the R-phase alternating voltage in a case where the zero cross point is detected using the phase voltage, and a zero cross point of the R-S voltage in a case where the zero cross point is detected using the inter-line voltage). For example, the zero cross detection circuit may detect two phases of the three-phase alternating voltage. Further, the zero cross detection circuit may detect three phases of the three-phase alternating voltage. In the zero cross detection circuit, it is possible to reduce an influence of noise or a detection error on a phase detection result if the number of voltages of which a phase is detected in the three-phase alternating voltage increases.

The phase identification part 102 outputs the identified phase of the voltage of each of the R phase, the S phase, and the T phase of the three-phase alternating voltage to the current identification part 103. For example, the phase identification part 102 outputs the zero cross timing of each of specific inter-line voltages (R-S voltage, S-T voltage, and T-R voltage) indicating the phase of the voltage of each of the R phase, the S phase, and the T phase of the three-phase alternating voltage described with reference to Fig. 3 to the current identification part 103.

If the current identification part 103 receives the zero cross timing from phase identification part 102, the current identification part 103 identifies the converter current in each period of time indicated by the zero cross timing (step S12). A case where a frequency of the three-phase alternating voltage is 50 Hz, an amplitude of the three-phase alternating voltage is 380 volts, and an unbalance rate is 3% will be described as a specific example. In this case, the current identification part 103 identifies the converter current in each of a period of time 1 to a period of time 6 illustrated in part (2) of Fig. 3. The current identification part 103 outputs a current value of the identified converter current in each of period of time 1 to period of time 6 to the microcomputer 104.

If the microcomputer 104 receives the current value of the converter current in each of period of time 1 to period of time 6 from the current identification part 103, the current estimation part 105 estimates currents corresponding to the R phase, the S phase, and the T phase of the three-phase alternating voltage on the basis of the current value of the converter current in each of period of time 1 to period of time 6 (step S13). A case where the three-phase alternating voltage is in an unbalanced state and has the voltage and the current illustrated in Fig. 2 will be described as a specific example. In this case, the current estimation part 105 estimates the current corresponding to the R phase of the three-phase alternating voltage as an average value of the converter current in (period of time 1 + period of time 2 + period of time 4 + period of time 5). The current estimation part 105 estimates the current corresponding to the S phase of the three-phase alternating voltage as an average value of the converter current in (period of time 1 + period of time 3 + period of time 4 + period of time 6). The current estimation part 105 estimates the current corresponding to the T phase of the three-phase alternating voltage as an average value of the converter current in (period of time 2 + period of time 3 + period of time 5 + period of time 6).

The current estimation part 105 outputs the average value of the converter current estimated for each of the R phase, the S phase, and the T phase of the three-phase alternating voltage to the current determination part 106.

The current determination part 106 receives the average value of the converter current estimated for each of the R phase, the S phase, and the T phase of the three-phase alternating voltage from the current estimation part 105. The current determination part 106 compares the received average value of the converter current estimated for each of the R phase, the S phase, and the T phase with the current abnormality detection threshold value to determine whether or not each average value of the converter current exceeds the current abnormality detection threshold value (step S14). The current abnormality detection threshold value is a current value serving as a criterion on the basis of which the current determination part 106 determines that the electric power control device 1 is in a state different from a normal state, that is, in an abnormal state.

In a case where the average value of the converter current exceeds the current abnormality detection threshold value (YES in step S14), the current determination part 106 determines that the electric power control device 1 is in an abnormal state. The current determination part 106 outputs an abnormality notification signal for notifying that the electric power control device 1 is in an abnormal state to the current limiting part 107. The abnormality notification signal includes information for notifying that the electric power control device 1 is in an abnormal state, and information on the average value of the converter current.

If the current limiting part 107 receives the abnormality notification signal from the current determination part 106, the current limiting part 107 limits an upper limit of a current for any one of the R phase, the S phase, and the T phase corresponding to a largest average value of the converter current determined to be in an abnormal state (step S15). For example, the current limiting part 107 identifies any one of the R phase, the S phase, and the T phase corresponding to the highest average value of the converter current on the basis of the abnormality notification signal received from the current determination part 106. The current limiting part 107 limits the upper limit of the current corresponding to the alternating voltage of the identified one of the R phase, the S phase, and the T phase, to limit the upper limit of the current flowing through the inverter 30. For example, the current limiting part 107 changes a threshold value of a window comparator that determines an upper limit of a current, which is arranged in a stage before the inverter 30, to limit the upper limit of the current flowing through the inverter 30. Limiting the upper limit of the current flowing through the inverter 30 includes setting the upper limit of the current to zero. Further, limiting the upper limit of the current flowing through the inverter 30 also includes stopping the electric power control device 1.

The inverter 30 receives a DC voltage corresponding to the current of which the upper limit has been limited from the smoothing circuit including the reactor 108 and the capacitor 109. The inverter 30 generates an alternating voltage for driving the motor 40 from the DC voltage corresponding to the current of which the upper limit has been limited (step S16). The inverter 30 outputs the generated alternating voltage to the motor 40.

If the motor 40 receives the alternating voltage from the inverter 30, the motor 40 operates according to the received alternating voltage (step S17). The process returns to step S11.

In a case where the average value of the converter current is lower than or equal to the current abnormality detection threshold value (NO in step S14), the current determination part 106 determines that the electric power control device 1 is in a normal state. In this case, the current limiting part 107 releases the upper limit of the current that has been limited (step S18). The process returns to step S11.

The process flow of the electric power control device 1 according to an embodiment of the present invention has been described above. In the process of the electric power control device 1 described above, the phase identification part 102 identifies the phases of respective voltages of the R phase, the S phase, and the T phase of the received three-phase alternating voltage. If the current identification part 103 receives the zero cross timing from the phase identification part 102, the current identification part 103 identifies the converter currents corresponding to the respective voltages of the R phase, the S phase, and the T phase of the three-phase alternating voltage in each period of time indicated by the zero cross timing.

Thus, it is possible to easily detect an abnormal state in the electric power control device 1 (system) and protect the electric power control device 1 on the basis of the estimated currents corresponding to the respective voltages of the R phase, the S phase, and the T phase in a case where respective voltages of the R phase, the S phase, and the T phase of the three-phase alternating power supply enter an unbalanced state..

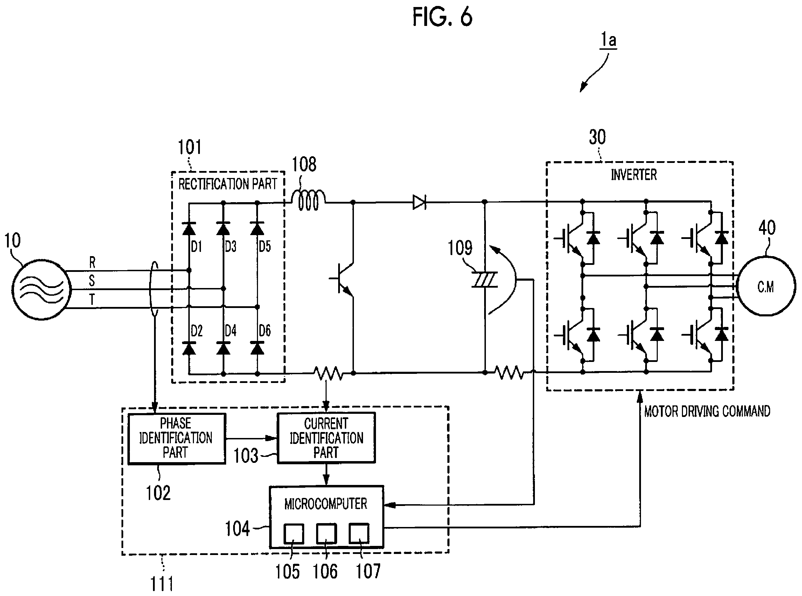

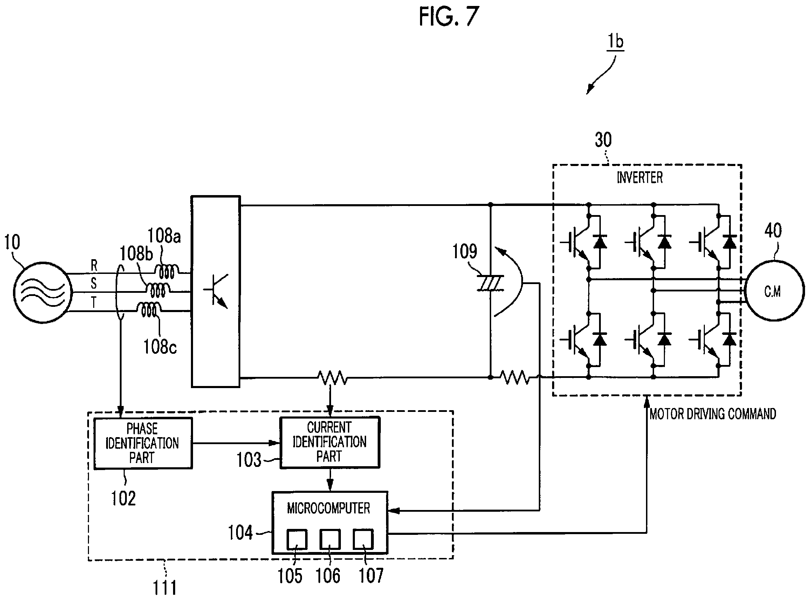

The current estimation circuit 111 according to an embodiment of the present invention is not limited to the application to the electric power control device 1 described in this embodiment. For example, as illustrated in Fig. 6, the current estimation circuit 111 may be applied to the electric power control device 1 including a pulse amplitude modulation (PAM) circuit. Further, as illustrated in Fig. 7, the current estimation circuit 111 may be applied to an electric power control device 1 including an active converter using a transistor or the like. Further, the current estimation circuit 111 may be applied to an electric power control device 1 including an active filter.

The current identification part 103 according to an embodiment of the present invention may detect the converter current on the basis of a current detected by a current sensor such as a current transformer arranged in place of the current detection resistor 110.

The process flow of the electric power control device 1 according to an embodiment of the present invention has been described using the process for the three-phase alternating voltage as an example, the process flow is not limited thereto. For example, the process flow of the electric power control device 1 may be a process for a two-phase alternating voltage and a four or more-phase alternating voltage. However, in a case where the electric power control device 1 performs the process for the two-phase alternating voltage or a four or more-phase alternating voltage, the phase difference between the respective voltages is different from a phase difference 120° of the three-phase alternating voltage.

In the process flow in an embodiment of the present invention, a processing order may be interchanged in a range in which an appropriate process is performed.

Although the embodiments of the present invention have been described, the current estimation circuit 111 included in the electric power control device 1 described above includes a computer system therein. The above-described processes of the steps are stored in the form of a program in a computer-readable recording medium, and this program is read and executed by the computer to perform the above process. Here, the computer-readable recording medium refers to a magnetic disk, a magnetooptical disc, a CD-ROM, a DVD-ROM, a semiconductor memory, or the like. Further, this computer program may be distributed via a communication line, and the computer receiving this distribution may execute the program.

Further, the above program may realize some of the above-described functions. Further, the program may be a file capable of realizing the above-described functions in combination with a program previously stored in a computer system, a so-called differential file (a differential program).

Several embodiments of the present invention have been described, but the embodiments are examples and do not limit the scope of the invention. Various omissions, substitutions, and changes may be made for the embodiments without departing from the scope of the invention.

### Industrial Applicability

According to the current estimation circuit for a rectification circuit, the AC-DC converter, the electric power control device, the current estimation circuit, and the method and the program for current estimation described above, it is possible to easily detect an abnormal state in a system and protect the system in a case where respective voltages of the R phase, the S phase, and the T phase of the three-phase alternating power supply enter the unbalanced state. Reference Signs List

1: electric power control device
10: alternating power supply
20: AC-DC converter
30: inverter
40: motor
100: rectification circuit
101: rectification part
102: phase identification part
103: current identification part
104: microcomputer
105: current estimation part
106: current determination part
107: current limiting part
108, 108a, 108b, 108c: reactor
109: capacitor
110: current detection resistor
111: current estimation circuit
D1, D2, D3, D4, D5, D6: diode

## Claims

1. A current estimation circuit for a rectification circuit, the current estimation circuit comprising:
a phase identification part that identifies respective phases of a plurality of alternating voltages that are output from a power supply; and
a current identification part that identifies currents corresponding to voltages after rectification of the plurality of alternating voltages at time intervals determined on the basis of the respective phases identified by the phase identification part.

2. The current estimation circuit for a rectification circuit according to claim 1,
wherein the current identification part identifies the currents corresponding to the voltages after rectification on the basis of a current flowing through a resistor after the rectification.

3. The current estimation circuit for a rectification circuit according to claim 1,
wherein the current identification part identifies the currents corresponding to the voltages after rectification on the basis of a current detected by a current transformer after the rectification.

4. The current estimation circuit for a rectification circuit according to any one of claims 1 to 3, further comprising:
a current estimation part that estimates respective currents corresponding to the plurality of alternating voltages on the basis of the currents corresponding to the voltages after rectification identified by the current identification part.

5. The current estimation circuit for a rectification circuit according to claim 4, further comprising:
a current determination part that determines whether or not each of the currents estimated by the current estimation part exceeds a current abnormality detection threshold value; and
a current limiting part that limits an upper limit of the respective estimated currents corresponding to the determination in a case where the current determination part determines that the respective estimated currents exceed the current abnormality detection threshold value.

6. An AC-DC converter, comprising:
the current estimation circuit for a rectification circuit according to any one of claims 1 to 5; and
a smoothing circuit that smoothes a voltage output by the rectification circuit.

7. An electric power control device, comprising:
the AC-DC converter according to claim 6; and
an inverter that converts a DC voltage output by the AC-DC converter into an alternating voltage.

8. A current estimation circuit, comprising:
a current estimation part that estimates respective currents corresponding to a plurality of alternating voltages output from a power supply on the basis of currents corresponding to voltages after rectification of the plurality of alternating voltages at time intervals determined on the basis of respective phases of the plurality of alternating voltages.

9. The current estimation circuit according to claim 8, further comprising:
a current determination part that determines whether or not each of the currents estimated by the current estimation part exceeds a current abnormality detection threshold value; and
a current limiting part that limits an upper limit of the respective estimated currents corresponding to the determination in a case where the current determination part determines that the respective estimated currents exceed the current abnormality detection threshold value.

10. A current estimation method, comprising:
identifying respective phases of a plurality of alternating voltages that are output from a power supply; and
identifying currents corresponding to voltages after rectification of the plurality of alternating voltages at time intervals determined on the basis of the respective identified phases.

11. A current estimation method, comprising:
estimating respective currents corresponding to a plurality of alternating voltages output from a power supply on the basis of currents corresponding to voltages after rectification of the plurality of alternating voltages at time intervals determined on the basis of respective phases of the plurality of alternating voltages.

12. A program that causes a computer to execute:
estimating respective currents corresponding to a plurality of alternating voltages output from a power supply on the basis of currents corresponding to voltages after rectification of the plurality of alternating voltages at time intervals determined on the basis of respective phases of the plurality of alternating voltages.

## Amended claims

### Amended claims under Art. 19.1 PCT

**1.** (Amended) A current estimation circuit for a rectification circuit, the current estimation circuit comprising:
a phase identification part that identifies respective phases of a plurality of alternating voltages that are output from a power supply;
a current identification part that identifies currents corresponding to voltages after rectification of the plurality of alternating voltages at time intervals determined on the basis of the respective phases identified by the phase identification part;
a current estimation part that estimates respective currents corresponding to the plurality of alternating voltages on the basis of the currents corresponding to the voltages after rectification identified by the current identification part;
a current determination part that determines whether or not each of the currents estimated by the current estimation part exceeds a current abnormality detection threshold value; and
a current limiting part that limits an upper limit of the respective estimated currents corresponding to the determination in a case where the current determination part determines that the respective estimated currents exceed the current abnormality detection threshold value.

**2.** The current estimation circuit for a rectification circuit according to claim 1,
wherein the current identification part identifies the currents corresponding to the voltages after rectification on the basis of a current flowing through a resistor after the rectification.

**3.** The current estimation circuit for a rectification circuit according to claim 1,
wherein the current identification part identifies the currents corresponding to the voltages after rectification on the basis of a current detected by a current transformer after the rectification.

**4.** (Deleted)

**5.** (Deleted)

**6.** (Amended) An AC-DC converter, comprising:
the current estimation circuit for a rectification circuit according to any one of claims 1 to 3; and
a smoothing circuit that smoothes a voltage output by the rectification circuit.

**7.** An electric power control device, comprising:
the AC-DC converter according to claim 6; and
an inverter that converts a DC voltage output by the AC-DC converter into an alternating voltage.

**8.** (Amended) A current estimation circuit, comprising:
a current estimation part that estimates respective currents corresponding to a plurality of alternating voltages output from a power supply on the basis of currents corresponding to voltages after rectification of the plurality of alternating voltages at time intervals determined on the basis of respective phases of the plurality of alternating voltages;
a current determination part that determines whether or not each of the currents estimated by the current estimation part exceeds a current abnormality detection threshold value; and
a current limiting part that limits an upper limit of the respective estimated currents corresponding to the determination in a case where the current determination part determines that the respective estimated currents exceed the current abnormality detection threshold value.

**9.** (Deleted)

**10.** (Amended) A current estimation method, comprising:
identifying respective phases of a plurality of alternating voltages that are output from a power supply;
identifying currents corresponding to voltages after rectification of the plurality of alternating voltages at time intervals determined on the basis of the respective identified phases;
estimating respective currents corresponding to the plurality of alternating voltages on the basis of the identified currents corresponding to the voltages after rectification;
determining whether or not each of the estimated currents exceeds a current abnormality detection threshold value; and
limiting an upper limit of the respective estimated currents corresponding to the determination in a case where it is determined that the respective estimated currents exceed the current abnormality detection threshold value.

**11.** (Amended) A current estimation method, comprising:
estimating respective currents corresponding to a plurality of alternating voltages output from a power supply on the basis of currents corresponding to voltages after rectification of the plurality of alternating voltages at time intervals determined on the basis of respective phases of the plurality of alternating voltages;
determining whether or not each of the estimated currents exceeds a current abnormality detection threshold value; and
limiting an upper limit of the respective estimated currents corresponding to the determination in a case where it is determined that the respective estimated currents exceed the current abnormality detection threshold value.

**12.** (Amended) A program that causes a computer to execute:
identifying respective phases of a plurality of alternating voltages that are output from a power supply;
identifying currents corresponding to voltages after rectification of the plurality of alternating voltages at time intervals determined on the basis of the respective identified phases; and
estimating respective currents corresponding to the plurality of alternating voltages on the basis of the identified currents corresponding to the voltages after rectification.

**13.** (Added) A program that causes a computer to execute:
estimating respective currents corresponding to a plurality of alternating voltages output from a power supply on the basis of currents corresponding to voltages after rectification of the plurality of alternating voltages at time intervals determined on the basis of respective phases of the plurality of alternating voltages;
determining whether or not each of the estimated currents exceeds a current abnormality detection threshold value; and
limiting an upper limit of the respective estimated currents corresponding to the determination in a case where it is determined that the respective estimated currents exceed the current abnormality detection threshold value.
